# EUROPÄISCHE PATENTSCHRIFT

(11) **EP 3 166 804 B1**
(45) Veröffentlichungstag und Bekanntmachung des Hinweises auf die Patenterteilung: **11.07.2018**
(21) Anmeldenummer: 15723201.8
(22) Anmeldetag: 12.05.2015
(51) Int. Cl.: B60C 15/06

(54) **NUTZFAHRZEUGREIFEN**
UTILITY VEHICLE TYRE
PNEU DE VÉHICULE UTILITAIRE

(30) Priorität: 08.07.2014 DE 102014213240
(43) Veröffentlichungstag der Anmeldung: 17.05.2017
(73) Patentinhaber: Continental Reifen Deutschland GmbH, 30165 Hannover (DE)
(72) Erfinder: KRAUS, Martin Josef, 31162 Bad Salzdetfurth (DE)
(74) Vertreter: Finger, Karsten
(86) Internationale Anmeldenummer: PCT/EP2015/060397
(87) Internationale Veröffentlichungsnummer: WO 2016/005084

(56) Entgegenhaltungen:
- EP-A1- 2 345 548
- DE-A1-102010 016 007
- JP-A- 2001 225 618
- JP-A- 2008 195 339

## Beschreibung

Die Erfindung betrifft einen Nutzfahrzeugreifen radialer Bauart, welcher als Schrägschulterreifen ausgeführt ist, mit einer luftdichten Innenschicht, welche gegebenenfalls mit einem Füllprofil kombiniert ist, einer ein- oder mehrlagigen Karkasseinlage mit Festigkeitsträgern aus Stahlkord oder einem Werkstoff ähnlicher Festigkeit, wobei die Karkasseinlage in Wulstbereichen um Wulstkerne Karkasshochschläge bildend umgeschlagen ist, wobei in jedem Wulstbereich an der Außenseite der Karkasseinlage ein Stahlkordwulstverstärker verläuft, welcher den Wulstbereich umläuft und einen reifenaußenseitig verlaufenden Abschnitt und einen reifeninnseitig verlaufenden Abschnitt aufweist,
wobei zwischen der Innenschicht bzw. zwischen dem Füllprofil und dem reifeninnenseitig verlaufenden Abschnitt des Stahlkordwulstverstärkers und dem an diesen Abschnitt in radialer Richtung anschließenden Abschnitt der Karkasseinlage zumindest eine in eine Gummimischung eingebettete textile Festigkeitsträger aufweisende Verstärkungslage angeordnet ist.

Ein Nutzfahrzeugreifen der eingangs genannten Art ist aus der EP 2 345 548 A1 bekannt. Dieser Reifen weist in den Wulstbereichen eine mit Stahlkorden als Festigkeitsträger versehene Verstärkungslage auf, welche den Wulstbereich umläuft und einen reifenaußenseitig verlaufenden Abschnitt und einen reifeninnseitig verlaufenden Abschnitt aufweist, wobei diese Abschnitte nur eine geringe radiale Erstreckung besitzen. Es ist eine textile Korde aufweisende Verstärkungslage vorgesehen, deren Korde unter einem Winkel von 20 ° bis 70 ° zur radialen Richtung verlaufen.

Die JP 2008 195 339 A offenbart einen Fahrzeugluftreifen mit mehreren Lagen von Stahlkordwulstverstärkern in den Wulstbereichen in Kombination mit einer Nylonkorde aufweisenden Verstärkungslage. Die JP 2001 225 618 A offenbart einen weiteren Fahrzeugluftreifen mit Wulstbereichen, die mit zwei textile Festigkeitsträger aufweisenden Verstärkungslagen und einem Stahlkordwulstverstärker versehen sind.

Aus der DE 10 2010 016 007 A1 ist ein Reifen mit einem aus drei Gliedern bestehenden Gabelprofil, von denen zwei reifeninnseitig das Ende eines Stahlkordwulstverstärkers abdecken, bekannt. Ein weiteres mehrgliedriges Gabelprofil bedeckt den Endabschnitt des Karakasshochschlages sowie den reifenaußenseitigen Endabschnitt des Stahlkordwulstverstärkers. Die Gabelprofile sind vorzugsweise aus einer Kieselsäure enthaltenden Kautschukmischung gefertigt. Bei einem derart ausgeführten Reifen soll eine Rissbildung an den Schnittkanten des Krakasshochschlages und des Stahlkordwulstverstärkers vermieden werden.

Aus der DE 3 617 880 A1 ist ein Fahrzeugluftreifen in Radialbauart für Einätze bei großen Lasten bekannt. Bei diesem Reifen verläuft axial außerhalb der Karkasseinlage und des Stahlkordwulstverstärkers reifenaußenseitig eine textile Festigkeitsträger enthaltende Verstärkungslage. Reifen mit solchen Verstärkungslagen sind aufwendig und teuer in ihrer Produktion.

Der Erfindung liegt die Aufgabe zugrunde, einen Reifen der eingangs genannten Art mit einer besonders hohen Lastfähigkeit sowie einer hohen Laufleistung, welcher mehrmals runderneuert werden kann, zur Verfügung zu stellen.

Gelöst wird die gestellte Aufgabe erfindungsgemäß dadurch, dass die textilen Festigkeitsträger der Verstärkungslage parallel zu den Festigkeitsträgern in der Karkasseinlage verlaufen, wobei diese Verstärkungslage beginnend in einer Höhe von 40 mm bis 60 mm bis in eine Höhe von 100 mm bis 150 mm verläuft, wobei die Höhen in radialer Richtung von einer in axialer Richtung durch den Felgeneckpunkt verlaufenden Linie gemessen werden.

Die gemäß der Erfindung vorgesehen Verstärkungslag(n) gewährleistet bzw. gewährleisten durch ihre Anordnung bei der Reifeninnenseite und ihre parallel zu den Festigkeitsträgern in der Karkasseinlage verlaufenden Festigkeitsträger eine besonders hohe Lastfähigkeit und eine hohe Laufleistung. In den felgennahen Bereichen des Reifens sind Störstellen durch Zuschnittkanten von üblichen Wulstverstärkungen vermieden. Darüber hinaus können Reifen, die gemäß der Erfindung ausgeführt sind, auf Grund ihrer Konstruktion kostengünstig und rationell gefertigt werden.

Es ist von Vorteil, wenn die Verstärkungslage(n) beginnend in einer Höhe von 45 mm bis 55 mm bis in eine Höhe von 120 mm bis 140 mm verläuft bzw. verlaufen, wobei die Höhen in radialer Richtung von einer in axialer Richtung durch den Felgeneckpunkt verlaufenden Linie gemessen werden. Durch eine derart angeordnete Verstärkungslage wird eine besonderes gute Haltbarkeit der Wulstbereiche gewährleistest.

Darüber hinaus ist es von Vorteil, wenn die Gummimischung der Verstärkungslage(n) als Füllstoff Kieselsäure in einer Menge von 10 phr bis 50 phr, besonders bevorzugt in einer Menge von 20 phr bis 40 phr, enthält. Durch den Zusatz von Kieselsäure werden optimale Hafteigenschaften zwischen den textilen Festigkeitsträgern und der Gummimatrix gewährleistet sowie die Reißeigenschaften des Gummis verbessert, wodurch die Verstärkungslage(n) auch bei hohen Lasten zu einer besonders hohen Laufleistung beiträgt bzw. beitragen.

Ist eine einzige Verstärkungslage vorgesehen, ist es für eine möglichst optimale Versteifung des radial äußeren Bereiches des Wulstbereiches von Vorteil, wenn der radiale Abstand zwischen dem Ende des reifeninnenseitig verlaufenden Abschnittes des Stahlkordwulstverstärkers und dem radial inneren Ende der Verstärkungslage mindestens 15 mm beträgt.

Bei weiteren Ausführungsformen der Erfindung können bis zu vier miteinander verbundene Verstärkungslagen vorgesehen sein, wobei zumindest zwei dieser Verstärkungslagen den Endabschnitt des reifeninnenseitig verlaufenden Abschnittes des Stahlkordwulstverstärkers derart überlappen, dass die radialen Abstände zwischen dem Ende des reifeninnseitig verlaufenden Abschnittes des Stahlkordwulstverstärkers und den radial inneren Enden der Verstärkungslagen mindestens 15 mm betragen. Ein derart ausgeführter Fahrzeugluftreifen erweist sich als besonders widerstandsfähig gegenüber Belastungen.

Weitere Merkmale, Vorteile und Einzelheiten der Erfindung werden nun anhand der Zeichnung näher erläutert. Dabei zeigt

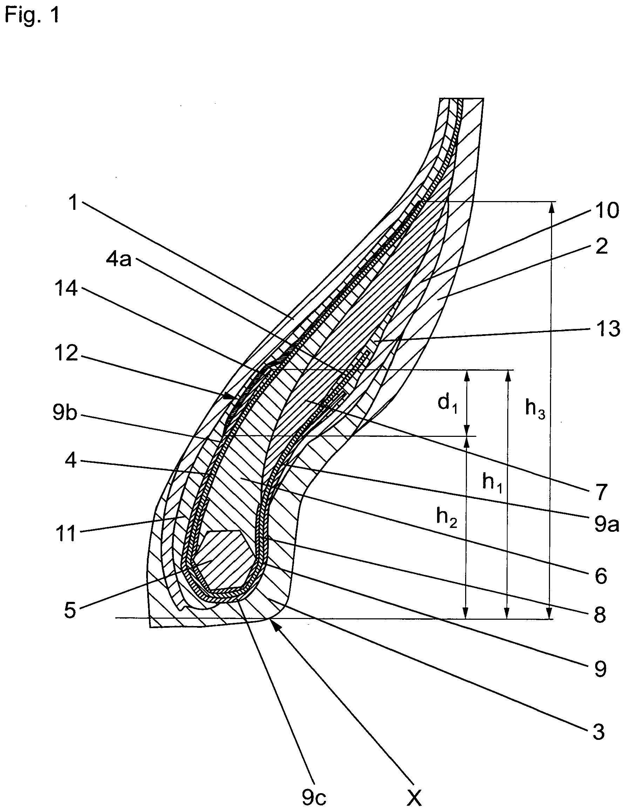

Fig. 1 einen Querschnitt durch einen der Wulstbereiche eines Nutzfahrzeugreifens, der als Schrägschulterreifen ausgeführt ist, mit einer Ausführungsform der Erfindung.

Die nachfolgend angegebenen Höhen hᵢ (i = 1 bis 3) werden ausgehend von einer in axialer Richtung durch den Felgeneckpunkt X verlaufenden Linie in radialer Richtung gemessen.

In Fig. 1 sind von den Bauteilen eines Nutzfahrzeugreifens eine luftdichte Innenschicht 1, eine Seitenwand 2, ein Hornprofil 3, eine ein- oder mehrlagige Karkasseinlage 4 mit Stahlkorden oder einem Werkstoff ähnlicher Festigkeit als Festigkeitsträger, ein aus zugfesten Stahldrähten bestehender Wulstkern 5 sowie zwei auf dem Wulstkern 5 sitzende Kernprofile 6 und 7 dargestellt. Die Seitenwand 2 überlappt außenseitig das Hornprofil 3. Die Kernprofile 6 und 7 können aus identischen oder auch aus unterschiedlichen Kautschukmischungen gefertigt sein. Eine Kernfahne 8 aus in Gummi eingebetteten, vorzugsweise textilen Festigkeitsträgern ist derart um den Wulstkern 5 gelegt, dass sie die vom nicht dargestellten Gürtel kommende von innen nach außen um den Wulstkern 5 geschlagene Karkasseinlage 4 vom Wulstkern 5 trennt, wodurch ein direkter Kontakt der Karkasseinlage 4 mit dem Wulstkern 5 vermieden wird. Die Karkasseinlage 4 endet axial außen als Karkasshochschlag 4a neben dem Kernprofil 7.

Axial außerhalb der Karkasseinlage 4 und in Kontakt mit dieser verläuft ein Stahlkordwulstverstärker 9, welcher aus in Gummi eingebetteten zueinander im Wesentlichen parallel verlaufenden Stahlkorden besteht, die im Wesentlichen in Umfangsrichtung des Fahrzeugluftreifens ausgerichtet sind. Der Stahlkordwulstverstärker 9 weist einen reifenaußenseitigen Abschnitt 9a, einen reifeninnenseitigen Abschnitt 9b und einen diesen beide Abschnitte verbindenden, radial innerhalb des Wulstkernes 5 verlaufenden mittleren Abschnitt 9c auf. Der Abschnitt 9a endet radial innerhalb des Karkasshochschlages 4a, der Abschnitt 9b endet in radialer Richtung in einer Höhe h₁ von 50 mm bis 70 mm.

Zwischen dem reifenaußenseitigen Abschnitt 9a des Stahlkordwulstverstärkers 9 und dem Homprofil 3 ist ein Wulstaußenprofil 10 angeordnet. Das Wulstaußenprofil 10 erstreckt sich in radialer Richtung über den Abschnitt 9a des Stahlkordwulstverstärkers 9 und den Karkasshochschlag 4a hinaus, und läuft anschließend zwischen der Seitenwand 2 und dem Kernprofil 7 aus. Das Wulstaußenprofil 10 besteht vorzugsweise aus der Kautschukmischung des Kernprofils 7.

Axial innerhalb und in Kontakt mit der Innenschicht 1 erstreckt sich ein Füllprofil 11, in der Fachliteratur auch als Kappe bezeichnet, wobei das Füllprofil 11 und die Innenschicht 1 miteinander kombinierte Reifenbauteile sind. Abweichend von der dargestellten Ausführungsform kann jedoch nur die Innenschicht 1 und kein Füllprofil 11 vorhanden sein.

Reifeninnseitig ist axial außerhalb der Karkasseinlage 4 eine Verstärkungslage 12 angeordnet. Die Verstärkungslage 12 besteht aus in Gummi eingebetteten textilen Festigkeitsträgern, welche parallel zu den Festigkeitsträgern der Karkasseinlage 4 verlaufen. Als textile Festigkeitsträger kommen beispielsweise Nylon, Perlon, Rayon, Polyester oder aromatische Polyamide zum Einsatz, wobei die textilen Materialien innerhalb der Verstärkungslage 12 in Kombination miteinander verwendet werden können.

Die Verstärkungslage 12 erstreckt sich in radialer Richtung, beginnend in einer Höhe h₂, zwischen dem Füllprofil 11 und dem Stahlkordwulstverstärker 9 und überlappt das Ende des Abschnittes 9b des Stahlkordwulstverstärkers 9, welches sich in der Höhe h₁ befindet. Radial außerhalb des Abschnittes 9b verläuft die Verstärkungslage 12 in Kontakt mit der Karkasseinlage 4 in radialer Richtung weiter bis in eine Höhe h₃. Die Höhe h₂ beträgt 40 mm bis 60 mm, vorzugsweise 45 mm bis 55 mm, die Höhe h₃ 100 mm bis 150 mm, vorzugsweise 120 mm bis 140 mm. Die Differenz zwischen den Höhen h₁ und h₂ ist als radialer Abstand d₁ definiert, welcher mindestens 15 mm beträgt.

Abweichend von der dargestellten Ausführungsform können zwei bis vier Verstärkungslagen 12 vorhanden sein, welche über die Gummimatrix, in welche die Festigkeitsträger der Verstärkungslagen 12 eingebettet sind, miteinander verbunden sind. Die Verstärkungslagen 12 können in beliebiger Staffelung zueinander angeordnet sein. Sind zwei Verstärkungslagen 12 vorgesehen, so überlappen beide das Ende des Abschnittes 9b des Stahlkordwulstverstärkers 9. Sind mehr als zwei Verstärkungslagen 12 vorgesehen, so überlappen zumindest zwei der Verstärkungslagen 12 das Ende des Abschnittes 9b des Stahlkordwulstverstärkers 9. Die den Abschnitt 9b nicht überlappenden Verstärkungslagen 12 erstrecken sich in radialer Richtung beginnend ein einer Höhe größer h₁ und entlang der Karkasseinlage 4. Die radial inneren Enden der Verstärkungslagen 12 weisen radiale Abstände zum Ende des Abschnittes 9b des Stahlkordwulstverstärkers 9 von ≥ 15 mm auf.

Die der Gummimatrix der textilen Verstärkungslage(n) 12 zugrundeliegende Kautschukmischung enthält als Füllstoff Ruß und vorzugsweise Kieselsäure. Kieselsäure ist in Mengen von 10 phr bis 50 phr, bevorzugt in Mengen von 20 phr bis 40 phr, zugesetzt. Als Kautschukkomponente können in der Kautschukmischung Naturkautschuk und/oder Synthesekautschuke, beispielsweise Butylkautschuke oder Styrolbutadienkautschuke, eingesetzt werden. Des Weiteren enthält die Kautschukmischung die üblichen Bestandteile, wie beispielsweise Weichmacher, Aktivatoren, Schwefel oder Schwefelspender, Beschleuniger und weitere Additive, wie zum Beispiel Antioxidantien und Mastikationshilfsmittel.

Zwischen dem Wulstaußenprofil 10 und dem Kernprofil 7 befindet sich ein Gummiprofil 13, welches sowohl das Ende des reifenaußenseitigen Abschnittes 9a des Stahlkordwulstverstärkers 9 als auch den Karkasshochschlag 4a abdeckt. Ein weiteres Gummiprofil 14 bedeckt das Ende des reifeninnseitigen Abschnittes 9b des Stahlkorwulstverstärkers 9 und befindet sich zwischen der Verstärkungslage 12 und der Karkasseinlage 4.

### Bezugsziffernliste

- 1: Innenschicht
- 2: Seitenwand
- 3: Homprofil
- 4: Karkasseinlage
- 4a: Karkasshochschlag
- 5: Wulstkern
- 6: Kernprofil
- 7: Kernprofil
- 8: Kemfahne
- 9: Stahlkordwulstverstärker
- 9a: reifenaußenseitiger Abschnitt des Stahlkordwulstverstärkers
- 9b: reifeninnenseitiger Abschnitt des Stahlkordwulstverstärkers
- 9c: mittlerer Abschnitt des Stahlkordwulstverstärkers
- 10: Wulstaußenprofil
- 11: Füllprofil
- 12: Verstärkungslage
- 13: Gummiprofil
- 14: Gummiprofil
- h₁ bis h₃: Höhe
- dᵢ: radialer Abstand

## Patentansprüche

1. Nutzfahrzeugreifen radialer Bauart, welcher als Schrägschulterreifen ausgeführt ist, mit einer luftdichten Innenschicht (1), welche gegebenenfalls mit einem Füllprofil (11) kombiniert ist, einer ein- oder mehrlagigen Karkasseinlage (4) mit Festigkeitsträgern aus Stahlkord oder einem Werkstoff ähnlicher Festigkeit, wobei die Karkasseinlage (4) in Wulstbereichen um Wulstkerne (5) Karkasshochschläge (4a) bildend umgeschlagen ist, wobei in jedem Wulstbereich an der Außenseite der Karkasseinlage (4) ein Stahlkordwulstverstärker (9) verläuft, welcher den Wulstbereich umläuft und einen reifenaußenseitig verlaufenden Abschnitt (9a) und einen reifeninnseitig verlaufenden Abschnitt (9b) aufweist, wobei zwischen der Innenschicht (1) bzw. zwischen dem Füllprofil (11) und dem reifeninnenseitig verlaufenden Abschnitt (9b) des Stahlkordwulstverstärkers (9) und dem an diesen Abschnitt (9b) in radialer Richtung anschließenden Abschnitt der Karkasseinlage (4) zumindest eine in eine Gummimischung eingebettete textile Festigkeitsträger aufweisende Verstärkungslage (12) angeordnet ist,
**dadurch gekennzeichnet,**
**dass** die textilen Festigkeitsträger der Verstärkungslage (12) parallel zu den Festigkeitsträgern in der Karkasseinlage (4) verlaufen,
wobei diese Verstärkungslage (12) beginnend in einer Höhe (h₂) von 40 mm bis 60 mm bis in eine Höhe (h₃) von 100 mm bis 150 mm verläuft, wobei die Höhen (h₂, h₃) in radialer Richtung von einer in axialer Richtung durch den Felgeneckpunkt (X) verlaufenden Linie gemessen werden.

2. Nutzfahrzeugreifen nach Anspruch 1, **dadurch gekennzeichnet, dass** die Verstärkungslage (12) beginnend in einer Höhe (h₂) von 45 mm bis 55 mm bis in eine Höhe (h₃) von 120 mm bis 140 mm verläuft, wobei die Höhen (h₂, h₃) in radialer Richtung von einer in axialer Richtung durch den Felgeneckpunkt (X) verlaufenden Linie gemessen werden.

3. Nutzfahrzeugreifen nach Anspruch 1 oder 2, **dadurch gekennzeichnet, dass** die Festigkeitsträger in der Verstärkungslage (12) aus Nylon, Perlon, Rayon, Polyester oder aromatischen Polyamiden bestehen.

4. Nutzfahrzeugreifen nach einem der Ansprüche 1 bis 3, **dadurch gekennzeichnet, dass** die Gummimischung der Verstärkungslage (12) als Füllstoff Kieselsäure enthält.

5. Nutzfahrzeugreifen nach Anspruch 4, **dadurch gekennzeichnet, dass** in der Gummimischung der Verstärkungslage Kieselsäure in Mengen von 10 phr bis 50 phr, insbesondere in Mengen von 20 phr bis 40 phr, enthalten ist.

6. Nutzfahrzeugreifen nach einem der Ansprüche 1 bis 5, **dadurch gekennzeichnet, dass** eine einzige Verstärkungslage (12) vorgesehen ist, wobei der radiale Abstand (d₁) zwischen dem Ende des reifeninnenseitig verlaufenden Abschnittes (9b) des Stahlkordwulstverstärkers (9) und dem radial inneren Ende der Verstärkungslage (12) mindestens 15 mm beträgt.

7. Nutzfahrzeugreifen nach einem der Ansprüche 1 bis 5, **dadurch gekennzeichnet, dass** bis zu vier miteinander verbundene Verstärkungslagen vorgesehen sind.

8. Nutzfahrzeugreifen nach Anspruch 7, **dadurch gekennzeichnet, dass** zumindest zwei der vorgesehenen Verstärkungslagen mit dem Endabschnitt des reifeninnenseitig verlaufenden Abschnittes (9b) des Stahlkordwulstverstärkers (9) überlappen.

9. Nutzfahrzeugreifen nach Anspruch 7 oder 8, **dadurch gekennzeichnet, dass** die radialen Abstände zwischen dem Ende des reifeninnenseitig verlaufenden Abschnittes (9b) des Stahlkordwulstverstärkers (9) und den radial inneren Enden der Verstärkungslagen (12) mindestens 15 mm betragen.

## Claims

1. Utility vehicle tire of radial type of construction, which is in the form of a tapered bead seat tire, having an air-impermeable inner layer (1) which is possibly combined with a filler profile (11), having a single-ply or multi-ply carcass inlay (4) with strengthening members composed of steel cord or of a material of similar strength, wherein the carcass inlay (4) is, in bead regions, turned over bead cores (5) so as to form carcass turn-ups (4a), wherein, in each bead region, a steel cord bead reinforcement (9) runs on the outer side of the carcass inlay (4), which steel cord bead reinforcement runs around the bead region and has a section (9a) running at the tire outer side and a section (9b) running at the tire inner side, wherein, between the inner layer (1) or between the filler profile (11) and that section (9b) of the steel cord bead reinforcement (9) which runs at the tire inner side and that section of the carcass inlay (4) which adjoins said section (9b) in a radial direction, there is arranged at least one reinforcement ply (12) which has textile strengthening members embedded in a rubber mixture, **characterized in that** the textile strengthening members of the reinforcement ply (12) run parallel to the strengthening members in the carcass inlay (4), wherein this reinforcement ply (12) runs from a height (h₂) of 40 mm to 60 mm to a height (h₃) of 100 mm to 150 mm, wherein the heights (h₂, h₃) are measured in a radial direction from a line running in an axial direction through the wheel rim vertex (X).

2. Utility vehicle tire according to Claim 1, **characterized in that** the reinforcement ply (12) runs from a height (h₂) of 45 mm to 55 mm to a height (h₃) of 120 mm to 140 mm, wherein the heights (h₂, h₃) are measured in a radial direction from a line running in an axial direction through the wheel rim vertex (X).

3. Utility vehicle tire according to Claim 1 or 2, **characterized in that** the strengthening members in the reinforcement ply (12) are composed of Nylon, Perlon, rayon, polyester or aromatic polyamides.

4. Utility vehicle tire according to one of Claims 1 to 3, **characterized in that** the rubber mixture of the reinforcement ply (12) comprises silicic acid as filler material.

5. Utility vehicle tire according to Claim 4, **characterized in that** the rubber mixture of the reinforcement ply comprises silicic acid in amounts of 10 phr to 50 phr, in particular in amounts of 20 phr to 40 phr.

6. Utility vehicle tire according to one of Claims 1 to 5, **characterized in that** a single reinforcement ply (12) is provided, wherein the radial spacing (d₁) between the end of that section (9b) of the steel cord bead reinforcement (9) which runs at the tire inner side and the radially inner end of the reinforcement ply (12) amounts to at least 15 mm.

7. Utility vehicle tire according to one of Claims 1 to 5, **characterized in that** up to four interconnected reinforcement plies are provided.

8. Utility vehicle tire according to Claim 7, **characterized in that** at least two of the reinforcement plies provided overlap the end section of that section (9b) of the steel cord bead reinforcement (9) which runs at the tire inner side.

9. Utility vehicle tire according to Claim 7 or 8, **characterized in that** the radial spacings between the end of that section (9b) of the steel cord bead reinforcement (9) which runs at the tire inner side and the radially inner ends of the reinforcement plies (12) amount to at least 15 mm.

## Revendications

1. Pneu de véhicule utilitaire du type radial, qui est formé par un pneu à épaulement oblique, avec une couche intérieure étanche à l'air (1), qui est éventuellement combinée avec un profilé de remplissage (11), avec un insert de carcasse à une ou plusieurs couche(s) (4) avec des éléments de résistance en câble d'acier ou en un matériau de résistance équivalente, dans lequel l'insert de carcasse (4) est rabattu dans des régions de talon autour de tringles de talon (5) en formant des plis remontants de carcasse (4a), dans lequel un renfort de talon en câble d'acier (9) s'étend dans chaque région de talon sur le côté extérieur de l'insert de carcasse (4), et entoure la région de talon et présente une partie s'étendant sur le côté extérieur du pneu (9a) et une partie s'étendant sur le côté intérieur du pneu (9b), dans lequel au moins une couche de renforcement (12) présentant des éléments de résistance en textile noyés dans un mélange de gomme est disposée entre la couche intérieure (4) ou entre le profilé de remplissage (11) et la partie s'étendant sur le côté intérieur du pneu (9b) du renfort de talon en câble d'acier (9) et la partie de l'insert de carcasse (4) se raccordant à cette partie (9b) en direction radiale, **caractérisé en ce que** les éléments de résistance textiles de la couche de renforcement (12) s'étendent parallèlement aux éléments de résistance dans l'insert de carcasse (4), dans lequel cette couche de renforcement (12) s'étend en commençant à une hauteur (h₂) de 40 mm à 60 mm jusqu'à une hauteur (h₃) de 100 mm à 150 mm, dans lequel les hauteurs (h₂, h₃) sont mesurées en direction radiale à partir d'une ligne s'étendant en direction axiale à travers le point d'angle de la jante (X).

2. Pneu de véhicule utilitaire selon la revendication 1, **caractérisé en ce que** la couche de renforcement (12) s'étend en commençant à une hauteur (h₂) de 45 mm à 55 mm jusqu'à une hauteur (h₃) de 120 mm à 140 mm, dans lequel les hauteurs (h₂, h₃) sont mesurées en direction radiale à partir d'une ligne s'étendant en direction axiale à travers le point d'angle de la jante (X).

3. Pneu de véhicule utilitaire selon la revendication 1 ou 2, **caractérisé en ce que** les éléments de résistance dans la couche de renforcement (12) sont constitués de nylon, de perlon, de rayonne, de polyester ou de polyamides aromatiques.

4. Pneu de véhicule utilitaire selon l'une quelconque des revendications 1 à 3, **caractérisé en ce que** le mélange de gomme de la couche de renforcement (12) contient de l'acide silicique comme matière de charge.

5. Pneu de véhicule utilitaire selon la revendication 4, **caractérisé en ce que** de l'acide silicique en des quantités de 10 pce à 50 pce, en particulier en des quantités de 20 pce à 40 pce, est contenu dans le mélange de gomme de la couche de renforcement.

6. Pneu de véhicule utilitaire selon l'une quelconque des revendications 1 à 5, **caractérisé en ce qu'**il est prévu une seule couche de renforcement (12), dans lequel la distance radiale (d₁) entre l'extrémité de la partie s'étendant sur le côté intérieur du pneu (9b) du renfort de talon en câble d'acier (9) et l'extrémité radialement intérieure de la couche de renforcement (12) vaut au moins 15 mm.

7. Pneu de véhicule utilitaire selon l'une quelconque des revendications 1 à 5, **caractérisé en ce qu'**il est prévu jusque quatre couches de renforcement reliées l'une à l'autre.

8. Pneu de véhicule utilitaire selon la revendication 7, **caractérisé en ce qu'**au moins deux des couches de renforcement prévues se chevauchent avec la partie d'extrémité de la partie s'étendant sur le côté intérieur du pneu (9b) du renfort de talon en câble d'acier (9).

9. Pneu de véhicule utilitaire selon la revendication 7 ou 8, **caractérisé en ce que** les distances radiales entre l'extrémité de la partie s'étendant sur le côté intérieur du pneu (9b) du renfort de talon en câble d'acier (9) et les extrémités radialement intérieures des couches de renforcement (12) valent au moins 15 mm.
